# DEMANDE DE BREVET EUROPEEN

(11) **EP 1 892 657 A1**
(43) Date de publication de la demande: **27.02.2008**
(21) Numéro de dépôt: 07113504.0
(22) Date de dépôt: 31.07.2007
(51) Int. Cl.: G06Q 10/00, G06F 9/44

(54) **Système permettant de diffuser des conseils vers le propriétaire d'un animal de compagnie**

(30) Priorité: 02.08.2006 FR 0607071
(71) Demandeur: Wanimo SA, 01700 Neyron (FR)
(72) Inventeur: Sournac, Denys, 01600, Reyrieux (FR); Vidal, Isabelle, 01600, Reyrieux (FR)
(74) Mandataire: Becker, Philippe

(57) **Abrégé**

L'invention concerne un système permettant de diffuser des conseils vers le propriétaire d'un animal de compagnie, comprenant :
- des moyens de diffusion pour diffuser un formulaire électronique utilisateur comportant des champs de saisie déterminés,
- des moyens de saisie pour permettre au propriétaire de l'animal de compagnie de rédiger une question spécifique relative à l'animal de compagnie,
- une base de données comprenant :
- des éléments de réponse mémorisés selon une arborescence thématique,

- des moyens de sélection et d'assemblage permettant à un vétérinaire praticien :
- de sélectionner, dans la base de données, des éléments de réponse correspondant à la question spécifique posée par le propriétaire de l'animal de compagnie,
- d'assembler les éléments de réponse ainsi sélectionnés et de saisir un texte personnalisé pour constituer une réponse personnalisée à la question spécifique posée par le propriétaire de l'animal de compagnie.

## Description

### Problème abordé

La présente invention concerne le domaine des animaux de compagnie.

Plus particulièrement, la présente invention aborde le problème des propriétaires d'animaux de compagnie qui souhaitent, avant et/ou après et/ou en parallèle de consultations chez un vétérinaire ou bien en marge de telles consultations, obtenir des conseils concernant leurs animaux de compagnie. Par conseil, on désigne ici tout conseil relatif aux animaux de compagnie, notamment relatifs à l'accompagnement pré et post opératoire, à la santé de l'animal, à son comportement, à sa nutrition ou encore à son bien être. On exclut donc de ces conseils les diagnostics posés habituellement par les vétérinaires lors de consultations en cabinet. On inclut en revanche les diagnostics différentiels qui consistent à poser différentes hypothèses de diagnostic sans opter de manière définitive pour l'une d'entre elles. Avant d'effectuer la démarche, contraignante et coûteuse, de consulter un vétérinaire, les propriétaires d'animaux de compagnie aimeraient ainsi pouvoir obtenir de manière simple et rapide de tels conseils, ne serait-ce que pour obtenir confirmation de la nécessité d'aller consulter un vétérinaire.

La présente invention aborde également le problème de la diffusion, par les professionnels concernés, de ces mêmes conseils concernant les animaux de compagnie. En effet, pour à la fois toucher un maximum de propriétaires d'animaux de compagnie et conserver toute sa valeur, cette diffusion doit pouvoir s'effectuer à grande échelle tout en demeurant personnalisée et très professionnelle.

La présente invention aborde enfin le souhait des industriels fabricants de produits pour animaux de compagnie d'accroître la diffusion et le ciblage de leurs produits.

Différents documents antérieurs proposent des systèmes d'interrogation mettant en relation des clients avec des experts par l'intermédiaire d'Internet (US2001/0032244 ; US 6 829 585 ; US 6 230 287 ; XP002102511). Néanmoins, ces documents ne concernent pas le domaine vétérinaire. En outre, ils sont essentiellement destinés à un fonctionnement en temps réel et ne permettent pas à un expert de préparer une réponse structurée, complète et personnalisée.

### La solution

La présente invention offre une solution qui satisfait les attentes à la fois des propriétaires d'animaux de compagnie, des professionnels souhaitant diffuser des conseils concernant les animaux de compagnie et des industriels fabricants de produits destinés aux animaux de compagnie.

La présente invention concerne un système permettant de diffuser de manière personnalisée des conseils vers le propriétaire d'un animal de compagnie. Au sens de la présente invention, le terme générique de conseil désigne tout conseil relatif aux animaux de compagnie, à l'exclusion des diagnostics posés habituellement par les vétérinaires lors de consultations. Par conseil, au sens de la présente invention, on entend donc d'une part les diagnostics différentiels qui consistent à poser différentes hypothèses de diagnostic sans opter de manière définitive pour l'une d'entre elles. On vise également, d'autre part, tout conseil relatif à l'accompagnement pré et post opératoire, à la santé de l'animal, à son comportement, à sa nutrition ou encore à son bien être.

Le système est caractérisé en ce qu'il comprend des moyens de diffusion pour diffuser, à partir d'un serveur distant via un réseau de communication informatique de type Internet, vers un équipement informatique du propriétaire de l'animal de compagnie, un formulaire électronique utilisateur comportant des champs de saisie déterminés. Différents champs de saisie du formulaire peuvent inviter l'utilisateur à saisir des informations relatives à l'animal, telles que son nom, son sexe, son âge, sa race, son passé médical, des informations d'ordre général ou l'environnement de l'animal. Un champ de saisie prédéterminé peut également inviter l'utilisateur à rédiger une question spécifique relative à l'animal de compagnie. Par équipement informatique du propriétaire de l'animal de compagnie on inclura notamment un équipement de type ordinateur personnel (fixe ou portable) mais également un assistant personnel (de type PDA) ou encore un téléphone mobile.

Le système comporte en outre des moyens de saisie, notamment un clavier et une souris de l'équipement informatique, pour permettre au propriétaire de l'animal de compagnie, dans les champs de saisie déterminés, de :
- saisir des informations relatives à l'animal de compagnie, notamment le nom, le sexe, l'âge, la race de l'animal, son passé médical, des informations d'ordre général, l'environnement de l'animal,
- rédiger une question spécifique relative à l'animal de compagnie, notamment une question concernant un dérèglement comportemental ou des symptômes observés d'une possible pathologie.

Les informations ainsi que la question spécifique relatives à l'animal de compagnie sont transmises vers le serveur distant via le réseau de communication informatique.

Le système comporte en outre des moyens de traitement informatique installés dans le serveur distant et destinés à :
- recevoir les informations relatives à l'animal de compagnie et la question spécifique et à convertir les informations et la question reçues notamment en les retraitant, dans un premier format déterminé permettant à un vétérinaire praticien d'analyser rapidement la situation de l'animal de compagnie et de poser un diagnostic différentiel concernant l'animal de compagnie,
- exporter les informations relatives à l'animal de compagnie et la question spécifique ainsi convertis vers une interface informatique identifiée comme utilisée par un vétérinaire praticien, peu importe le lieu dans lequel se trouve le vétérinaire praticien.

Le système comporte ainsi une interface informatique identifiée comme utilisée par un vétérinaire praticien et présentant des moyens de réception des informations et de la question exportées.

Le système comporte en outre une base de données, associée à l'interface informatique et au serveur distant et accessible par l'interface informatique, comprenant des éléments de réponse, ou briques de réponse, mémorisés selon une arborescence thématique, notamment du type chien/dermatologie/allergies/boutons. La base de données comporte en outre un historique de réponses personnalisées déjà constituées et consistant chacune en un assemblage d'éléments de réponse déterminé. La base de données comporte en outre une liste de produits adaptés à l'animal de compagnie. Parmi ces produits, on peut citer, à titre d'exemples : les jouets pour animaux, les aliments, les produits de soins, les produits d'hygiène (shampoings, produits antiparasitaires), les accessoires (divers colliers, colliers anti-fugue), etc.

Le système comporte en outre des moyens de sélection et d'assemblage, associés à l'interface informatique, permettant au vétérinaire praticien :
- de sélectionner, dans la base de données, en activant un menu déroulant, des éléments de réponse correspondant à la question spécifique posée par le propriétaire de l'animal de compagnie,
- de consulter l'historique des réponses correspondant à la question spécifique posée par le propriétaire de l'animal de compagnie ou à une question voisine,
- d'assembler les éléments de réponse ainsi sélectionnés et de saisir un texte personnalisé pour constituer une réponse personnalisée à la question spécifique posée par le propriétaire de l'animal de compagnie,
- de sélectionner un nombre déterminé de produits en rapport avec un besoin de traitement correspondant à la question spécifique posée par le propriétaire de l'animal de compagnie dans la liste de produits adaptés à l'animal de compagnie ;
- d'insérer, dans la réponse personnalisée, les références des produits sélectionnés.

Ces moyens de sélection et d'assemblage ainsi que l'interface informatique peuvent se présenter sous la forme d'un terminal exécutant une application informatique appropriée. Cette application permettra par exemple d'afficher des informations, de permettre leur sélection, leur copie et leur insertion dans un champ d'édition d'une réponse.

Le système comporte en outre des seconds moyens de traitement informatique destinés à convertir la réponse personnalisée dans un second format déterminé, ergonomique et facilement lisible par le propriétaire de l'animal de compagnie.

De préférence, l'interface informatique du vétérinaire praticien comporte des premiers moyens d'affichage permettant d'afficher simultanément, sur une page d'écran unique:
- une première zone comportant les informations relatives à l'animal de compagnie converties dans le format déterminé,
- une deuxième zone comportant la question spécifique, posée par le propriétaire de l'animal de compagnie et convertie dans le format déterminé,
- une troisième zone comportant, sous forme de menu déroulant, les éléments de réponse correspondant à la question spécifique posée par le propriétaire de l'animal de compagnie,
- une quatrième zone comportant, sous forme de menu déroulant associé à un moteur de recherche, l'historique des réponses correspondant à la question spécifique posée par le propriétaire de l'animal de compagnie,
- une cinquième zone comportant, sous forme de menu déroulant, une liste de produits destinés à l'animal de compagnie,
- une sixième zone de construction de la réponse personnalisée à la question spécifique posée par le propriétaire de l'animal de compagnie comportant :

- l'assemblage des éléments de réponse sélectionnés,
- le texte personnalisé saisi par le vétérinaire praticien, et
- les références du nombre déterminé de produits en rapport avec le besoin de traitement correspondant à la question spécifique posée par le propriétaire de l'animal de compagnie.

On constate donc que les moyens de sélection et d'assemblage, associés aux premiers moyens d'affichage de l'interface informatique, permettent d'accélérer et d'optimiser considérablement la rédaction, par le vétérinaire praticien, de la réponse personnalisée à la question spécifique posée par le propriétaire de l'animal de compagnie. En effet, grâce au système selon l'invention, le vétérinaire praticien peut tout d'abord visualiser, dans les différentes zones ci-dessus énumérées d'une même page d'écran, toutes les informations dont il a besoin pour élaborer la réponse personnalisée à la question spécifique qui lui est posée. Il peut ensuite, de manière très rapide et ergonomique consulter l'historique des réponses personnalisées déjà constituées, sélectionner des éléments de réponse pré-rédigés et les insérer dans la zone de construction de la réponse personnalisée en y ajoutant un texte personnalisé.

Afin d'accélérer davantage la construction de la réponse personnalisée et d'accroître en même temps son caractère fortement personnalisé, les moyens de traitement informatique du serveur distant comportent en outre des moyens d'insertion pour insérer automatiquement le nom de l'animal de compagnie dans les éléments de réponse pré-rédigés aux emplacements appropriés.

Afin d'accélérer encore davantage la construction de la réponse personnalisée, le système selon l'invention peut proposer automatiquement au vétérinaire praticien une réponse complète préconstruite qui servira de base de travail et diminuera encore le temps de traitement de la question spécifique posée par le propriétaire de l'animal de compagnie.

Le système comporte en outre des premiers moyens de transmission destinés à transmettre la réponse personnalisée, convertie dans le second format déterminé, vers un espace-utilisateur d'un serveur distant accessible via un réseau de communication informatique.

Les premiers moyens de transmission peuvent être mis en oeuvre pour joindre à la réponse personnalisée des informations multimédia complémentaires, notamment de courtes séquences vidéo pratiques.

Le système comporte en outre des seconds moyens de transmission destinés à transmettre, vers l'équipement informatique du propriétaire de l'animal de compagnie, un message, notamment de type courriel, destiné à l'avertir que la réponse personnalisée à sa question spécifique est consultable en ligne dans l'espace-utilisateur du serveur distant.

Le système comporte en outre des moyens de connexion, mettant en oeuvre un identifiant associé à un mot de passe, permettant au propriétaire de l'animal de compagnie d'accéder, de manière sécurisée, à l'espace-utilisateur du serveur distant pour consulter la réponse personnalisée qui lui est destinée.

De préférence, le système comporte en outre des seconds moyens d'affichage permettant d'afficher simultanément, sur une page d'écran unique, dans l'espace-utilisateur :
- une première zone comportant un rappel de la question spécifique posée par le propriétaire de l'animal de compagnie,
- une deuxième zone comportant un historique des questions spécifiques posées par le propriétaire de l'animal de compagnie,
- une troisième zone comportant le texte de la réponse personnalisée à la question spécifique rédigée par le vétérinaire praticien,
- une quatrième zone permettant au propriétaire de l'animal de compagnie de saisir un complément de question à destination du vétérinaire praticien,
- une cinquième zone comportant le ou les produits de la liste de produits sélectionnés par le vétérinaire praticien.

On constate donc que le système selon l'invention permet au propriétaire de l'animal de compagnie d'accéder en ligne, de manière sécurisée, à un espace-utilisateur particulièrement ergonomique et convivial où toutes les informations peuvent être visualisées sur une même page d'écran, dans les différentes zones énumérées ci-dessus. Cet espace-utilisateur permet en outre au propriétaire de l'animal de compagnie de consulter l'historique des questions posées et des /réponses obtenues, des fiches santé détaillées de l'animal de compagnie avec l'historique médical et les photos correspondantes, les parrainages, la gestion des événements (décès, maladies,...).

La quatrième zone, permettant au propriétaire de l'animal de compagnie de saisir un complément de question à destination du vétérinaire praticien, rend le système particulièrement interactif puisqu'elle permet l'initiation d'un dialogue entre le propriétaire de l'animal de compagnie et le vétérinaire praticien. L'initiation d'un tel dialogue peut s'inscrire dans le cadre d'une formule d'abonnement payante à la charge du propriétaire de l'animal de compagnie. Toutefois, en pratique, c'est le vétérinaire praticien qui sera le plus souvent à l'origine du dialogue en posant, si besoin, au propriétaire de l'animal de compagnie une question complémentaire dont la réponse devra lui permettre de mieux cerner la situation de l'animal.

De préférence, les premiers moyens de transmission comportent des moyens de calcul permettant de différer la transmission de la réponse personnalisée d'une durée proportionnelle au degré de complexité de la réponse personnalisée élaborée par le vétérinaire praticien. Ainsi, le fait de différer la transmission de la réponse personnalisée alors même que sa préparation est achevée permet de renforcer le caractère sérieux et crédible de cette réponse. Le propriétaire de l'animal de compagnie n'a en effet pas connaissance du mode d'élaboration rapide de la réponse personnalisée qui lui est fournie. Il est par conséquent préférable de lui laisser supposer que le vétérinaire praticien qui en est l'auteur n'a disposé d'aucun des moyens décrits ci-dessus pour élaborer la réponse personnalisée.

De préférence, les seconds moyens de transmission permettent de transmettre, vers l'équipement informatique du propriétaire de l'animal de compagnie, des messages d'alerte, notamment de type courriel ou SMS, destinés à l'avertir d'un cas d'urgence concernant l'animal de compagnie. Il s'agira par exemple d'un message invitant le propriétaire de l'animal de compagnie à aller faire hospitaliser son animal au plus vite compte tenu des informations relatives à l'animal de compagnie qu'il aura fournies.

Selon une variante de réalisation de l'invention, le système comporte en outre un système expert, associé au serveur distant, destiné à diffuser, notamment de manière régulière, vers l'équipement informatique du propriétaire de l'animal de compagnie, des messages concernant le suivi d'un programme déterminé, par exemple un programme de rééducation de l'animal de compagnie suite à une opération. Ainsi, le propriétaire de l'animal de compagnie est informé en temps utile des différentes étapes d'un traitement à suivre. Il est par ailleurs invité par le système expert à renseigner certaines informations, notamment à communiquer les progrès de son animal dans le cadre d'une rééducation. Ainsi, le système expert peut, en retour, personnaliser les messages concernant le suivi du programme déterminé.

Le système expert peut également être mis en oeuvre pour diffuser des messages d'alerte vers l'équipement informatique du propriétaire de l'animal de compagnie, notamment des messages concernant des risques d'épidémies ou encore des alertes concernant des dates de rappels de vaccins automatiquement calculées à partir des informations relatives à l'animal de compagnie saisies par le propriétaire de l'animal de compagnie. Le propriétaire de l'animal de compagnie bénéficie ainsi d'un calendrier de rappel personnalisé basé sur un système d'agents planifiés et permettant le suivi médical et relationnel de l'animal de compagnie (vaccinations, traitements, antiparasitaires, anniversaire, suivi de croissance, suivi nutritionnel, relances anti-rupture d'aliment, rappel des standards de la race et comparateur,...).

Le système expert peut également être mis en oeuvre pour procéder à une analyse, notamment statistique, des questions spécifiques, posées par les différents propriétaires d'animaux de compagnie utilisant le système selon l'invention, afin de générer des messages de prévention.

Le système selon l'invention permet d'associer des éléments visuels aux conseils diffusés vers le propriétaire de l'animal de compagnie et de proposer, en accès payant, des modules de formation, notamment sous forme de séquences vidéo (éducation du chiot ou du chaton, notions d'hygiène générale, hygiène auriculaire, hygiène buccale, préventions saisonnières, traitements antiparasitaires, gestes d'urgence, etc.)

Le système selon l'invention permet également de diffuser des programmes d'accompagnement dans le cadre de rééducations comportementales (abonnement à des programmes de suivi de 4 à 6 mois avec soutien et échanges personnalisés et en groupe).

Le système selon l'invention comprend également un module de discussion (ou « chat ») spécifique qui permet de réaliser un accompagnement dans le cadre de rééducations comportementales (chat individuel, en groupe, enregistrement d'un historique des échanges, possibilité d'intégration d'un mini-questionnaire ou d'une image, etc.).

Le système selon l'invention peut également comprendre les éléments complémentaires suivants:
- un module de petites annonces en ligne modérées,
- une banque d'adoption relayant les informations et annonces des refuges (par pays/régions/espèce/animal/urgences),
- un module d'information et de prévention vétérinaire par campagnes d'emailings grâce à un algorithme d'analyse des questions posées afin de dégager les centres d'intérêt récurrents ou saisonniers des propriétaires d'animaux de compagnie,
- un module de conférences en ligne sur certaines thématiques (problèmes d'actualité du type grippe aviaire et problèmes saisonniers),
- des interfaces d'annuaires professionnels payants pour les annonceurs (éleveurs, toiletteurs, éducateurs),
- une interface permettant aux propriétaires d'animaux de compagnie de créer leur blog « compagnons » avec annuaire et moteur de recherche.

## Revendications

1. Système permettant de diffuser de manière personnalisée des conseils vers le propriétaire d'un animal de compagnie ; le système étant **caractérisé en ce qu'**il comprend :
- des moyens de diffusion pour diffuser, à partir d'un serveur distant, vers un équipement informatique du propriétaire de l'animal de compagnie, un formulaire électronique utilisateur comportant des champs de saisie déterminés, au moins un desdits champs de saisie invitant l'utilisateur à saisir des informations relatives à l'animal de compagnie et au moins un desdits champs de saisie invitant l'utilisateur à rédiger une question spécifique relative à l'animal de compagnie ;
- des moyens de saisie pour permettre au propriétaire de l'animal de compagnie, dans les champs de saisie déterminés, de :
- saisir des informations relatives à l'animal de compagnie,
- rédiger une question spécifique relative à l'animal de compagnie, notamment une question concernant un dérèglement comportemental ou des symptômes observés d'une possible pathologie,
- des moyens de traitement informatique destinés à :
- recevoir les informations relatives à l'animal de compagnie et la question spécifique et convertir les informations et la question reçues dans un premier format déterminé permettant à un vétérinaire praticien de poser un diagnostic différentiel concernant l'animal de compagnie,
- exporter les informations relatives à l'animal de compagnie et la question spécifique ainsi convertis vers une interface informatique identifiée comme utilisée par un vétérinaire praticien,
- une interface informatique identifiée comme utilisée par un vétérinaire praticien, présentant des moyens de réception des informations et de la question exportées ;
- une base de données, associée à l'interface informatique, comprenant :
- des éléments de réponse mémorisés selon une arborescence thématique, notamment du type chien/dermatologie/allergies/boutons,
- un historique de réponses personnalisées consistant chacune en un assemblage d'éléments de réponse déterminé,
- une liste de produits adaptés à l'animal de compagnie,
- des moyens de sélection et d'assemblage, associés à l'interface informatique, permettant au vétérinaire praticien :
- de sélectionner, dans la base de données, des éléments de réponse correspondant à la question spécifique posée par le propriétaire de l'animal de compagnie,
- de consulter l'historique des réponses correspondant à la question spécifique posée par le propriétaire de l'animal de compagnie,
- d'assembler les éléments de réponse ainsi sélectionnés et de saisir un texte personnalisé pour constituer une réponse personnalisée à la question spécifique posée par le propriétaire de l'animal de compagnie,
- de sélectionner un nombre déterminé de produits en rapport avec un besoin de traitement correspondant à la question spécifique posée par le propriétaire de l'animal de compagnie dans la liste de produits adaptés à l'animal de compagnie ;
- d'insérer, dans la réponse personnalisée, les références des produits sélectionnés,
- des seconds moyens de traitement informatique destinés à convertir la réponse personnalisée dans un second format déterminé, ergonomique et facilement lisible par le propriétaire de l'animal de compagnie,
- des premiers moyens de transmission destinés à transmettre la réponse personnalisée ainsi convertie vers un espace-utilisateur d'un serveur distant accessible via un réseau de communication informatique,
- des seconds moyens de transmission destinés à transmettre, vers l'équipement informatique du propriétaire de l'animal de compagnie, un message, notamment de type courriel, destiné à l'avertir que la réponse personnalisée à sa question spécifique est consultable en ligne dans l'espace-utilisateur du serveur distant,
- des moyens de connexion, mettant en oeuvre un identifiant associé à un mot de passe, permettant au propriétaire de l'animal de compagnie d'accéder de manière sécurisée à l'espace-utilisateur du serveur distant pour consulter la réponse personnalisée qui lui est destinée.

2. Système selon la revendication 1 **caractérisé en ce que** l'interface informatique du vétérinaire praticien comporte des premiers moyens d'affichage permettant d'afficher simultanément, sur une page d'écran unique:
- une première zone comportant les informations relatives à l'animal de compagnie converties dans le format déterminé,
- une deuxième zone comportant la question spécifique convertie dans le format déterminé,
- une troisième zone comportant, sous forme de menu déroulant, les éléments de réponse correspondant à la question spécifique posée par le propriétaire de l'animal de compagnie,
- une quatrième zone comportant, sous forme de menu déroulant associé à un moteur de recherche, l'historique des réponses correspondant à la question spécifique posée par le propriétaire de l'animal de compagnie,
- une cinquième zone comportant, sous forme de menu déroulant, une liste de produits destinés à l'animal de compagnie,
- une sixième zone de construction de la réponse personnalisée à la question spécifique posée par le propriétaire de l'animal de compagnie comportant :
- l'assemblage des éléments de réponse sélectionnés,
- le texte personnalisé saisi par le vétérinaire praticien, et
- les références du nombre déterminé de produits en rapport avec le besoin de traitement correspondant à la question spécifique posée par le propriétaire de l'animal de compagnie.

3. Système selon les revendications 1 ou 2 **caractérisé en ce qu'**il comporte des seconds moyens d'affichage permettant d'afficher simultanément, sur une page d'écran unique, dans l'espace-utilisateur :
- une première zone comportant un rappel de la question spécifique posée par le propriétaire de l'animal de compagnie,
- une deuxième zone comportant un historique des questions spécifiques posées par le propriétaire de l'animal de compagnie,
- une troisième zone comportant la réponse personnalisée à la question spécifique rédigée par le vétérinaire praticien,
- une quatrième zone permettant au propriétaire de l'animal de compagnie de saisir un complément de question à destination du vétérinaire praticien,
- une cinquième zone comportant le ou les produits de la liste de produits sélectionnés par le vétérinaire praticien.

4. Système selon les revendications 1 à 3 **caractérisé en ce que** les premiers moyens de transmission comportent des moyens de calcul permettant de différer la transmission de la réponse personnalisée d'une durée proportionnelle au degré de complexité de la réponse personnalisée élaborée par le vétérinaire praticien.

5. Système selon les revendications 1 à 4 **caractérisé en ce que** les seconds moyens de transmission permettent de transmettre, vers l'équipement informatique du propriétaire de l'animal de compagnie, des messages d'alerte, notamment de type courriel ou SMS, destinés à l'avertir d'un cas d'urgence concernant l'animal de compagnie.

6. Système selon l'une quelconque des revendications 1 à 5, comprenant des moyens de traitement construisant automatiquement une réponse complète préconstruite à la question spécifique, exportant la réponse préconstruite vers l'interface informatique identifiée comme appartenant à un vétérinaire praticien.
